# FASCICULE DE BREVET EUROPEEN

(11) **EP 2 603 469 B1**
(45) Date de publication et mention de la délivrance du brevet: **12.09.2018**
(21) Numéro de dépôt: 11752277.1
(22) Date de dépôt: 22.07.2011
(51) Int. Cl.: C03C 17/34

(54) **VITRAGE A PROPRIETES ANTISOLAIRES**
GLASSCHEIBE MIT SONNENABSCHIRMUNGSEIGENSCHAFTEN
GLASS PANEL HAVING SUN-SHIELDING PROPERTIES

(30) Priorité: 10.08.2010 FR 1056531
(43) Date de publication de la demande: 19.06.2013
(73) Titulaire: Saint-Gobain Glass France, 92400 Courbevoie (FR)
(72) Inventeur: MAUVERNAY, Bruno, 78600 Maisons Laffitte (FR); CHARLET, Emilie, F-75011 Paris (FR); SINGH, Laura Jane, F-75011 Paris (FR); POIROT, Charlotte, F-75011 Paris (FR)
(74) Mandataire: Saint-Gobain Recherche
(86) Numéro de dépôt international: PCT/FR2011/051776
(87) Numéro de publication internationale: WO 2012/020189

(56) Documents cités:
- EP-A1- 1 538 131
- EP-A1- 1 980 539
- WO-A1-2005/072946
- FR-A1- 2 927 897
- FR-A1- 2 939 788
- US-A1- 2009 126 791
- US-A1- 2010 132 756
- US-B2- 7 005 188
- Y.SATO, Y. SANNO, C. TASAKI, N. OKA, T. KAMIYAMA, Y. SHIGESATO: "Electrical and optical properties of Nb-doped TiO2 films deposited by dc magnetron sputtering using slightly reduced Nb-doped TiO2-x ceramic targets", JOURNAL OF VACUUM SCIENCE & TECHNOLOGY A, vol. 28, no. 4, 29 juin 2010 (2010-06-29), pages 851-855, XP002665248, DOI: 10.1116/1.3358153
- DATABASE WPI Week 200805 Thomson Scientific, London, GB; AN 2008-A69244 XP002630538, -& JP 2007 329109 A (NIPPON SHEET GLASS CO LTD) 20 décembre 2007 (2007-12-20)
- D. MARDARE, E. APOSTOL: "TiO2 thin films doped by Ce, Nb, Fe, deposited onto ITO/glass substrates", JOURNAL OF OPTOELECTRONICS AND ADVANCED MATERIALS, vol. 8, no. 3, 30 juin 2006 (2006-06-30), pages 914-916, XP002665249,
- KAO M C ET AL: "Microstructure and Optical Properties of Tantalum Modified TiO2 Thin Films Prepared by the Solâ Gel Process", JOURNAL OF SUPERCONDUCTIVITY AND NOVEL MAGNETISM ; INCORPORATING NOVEL MAGNETISM, vol. 23, no. 5, 26 janvier 2010 (2010-01-26), pages 843-845, XP019824231, KLUWER ACADEMIC PUBLISHERS-PLENUM PUBLISHERS, NE ISSN: 1557-1947

## Description

L'invention se rapporte au domaine des substrats ou articles verriers, du type vitrage de bâtiments ou automobiles, comprenant à leur surface des revêtements du type couches minces leur conférant des propriétés antisolaires. Par vitrage, on entend au sens de la présente invention tout produit verrier constitué par un ou plusieurs substrats verriers, en particulier les simples vitrages, les doubles vitrages, les triples vitrages etc. Par antisolaire, on entend au sens de la présente invention la faculté du vitrage de limiter le flux énergétique, notamment du rayonnement Infrarouge (IR), le traversant depuis l'extérieur vers l'intérieur de l'habitation ou de l'habitacle, tout en conservant une transmission lumineuse suffisante, c'est-à-dire typiquement supérieure à 30, voire 40 ou même 50%.

De tels vitrages munis d'empilements de couches minces agissent ainsi sur le rayonnement solaire incident et permettent une protection solaire et/ou une isolation thermique de l'habitacle ou de l'habitation. En outre, ces revêtements doivent être esthétiquement plaisants, c'est-à-dire qu'ils doivent présenter une colorimétrie, en transmission comme en réflexion, suffisamment neutre pour ne pas incommoder les utilisateurs ou alternativement une teinte légèrement bleue ou verte, notamment dans le domaine du bâtiment. Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement plus complexe de couches successives.

Le plus souvent les empilements en couches minces ayant des propriétés de contrôle solaire comprennent une voire plusieurs couches actives. Par couche active on entend une couche agissant de manière sensible sur le flux de rayonnement solaire traversant ledit vitrage. Une telle couche active, de façon connue, peut fonctionner soit principalement en mode de réflexion du rayonnement Infrarouge, soit principalement en mode d'absorption du rayonnement Infrarouge.

Notamment, les empilements les plus performants commercialisés à l'heure actuelle incorporent au moins une couche métallique du type Argent fonctionnant essentiellement sur le mode de la réflexion d'une majeure partie du rayonnement IR (infrarouge) incident. On qualifie le plus souvent ces empilements de bas émissifs (low-e en anglais). Ces couches sont cependant très sensibles à l'humidité et sont donc exclusivement utilisées dans des doubles vitrages, en face 2 ou 3 de celui-ci pour être protégées de l'humidité. Les empilements selon l'invention ne comprennent pas de telles couches du type Argent.

D'autres couches métalliques à fonction antisolaire ont également été décrites dans le domaine, comprenant des couches fonctionnelles du type Nb, Ta ou W ou des nitrures de ces métaux, tel que décrit par exemple dans la demande WO01/21540. Cependant, au sein de telles couches, le rayonnement solaire est cette fois absorbé mais de manière non sélective, c'est-à-dire que le rayonnement IR (c'est-à-dire dont la longueur d'onde est compris entre environ 780 nm et 2500 nm) et le rayonnement visible sont également absorbés de manière non sélective. De tels vitrages présentent ainsi des sélectivités, telles qu'illustrées par le ratio T_{L}/g, proche de 1 (facteur de Transmission Lumineuse/ facteur solaire g, tels que déterminés selon la norme EN 410 (ou NF EN410)). De manière connue et classique, le facteur de transmission lumineuse ou transmission lumineuse T_{L} correspond au pourcentage du flux lumineux incident, c'est-à-dire dans le domaine de longueurs d'onde 380 à 780 nm, traversant le vitrage, selon l'illuminant D₆₅.

Vitrages antisolaires avec une couche absorbante d'un oxyde de titane dopé par Nb ou Ta sont décrits dans les demandes US 7 005 188 et US 2010 0132756.

De manière connue le facteur solaire g est égal au rapport de l'énergie traversant le vitrage (c'est-à-dire entrant dans le local) et de l'énergie solaire incidente. Plus particulièrement, il correspond à la somme du flux transmis directement à travers le vitrage et du flux absorbé par le vitrage (en y incluant les empilements de couches éventuellement présents à l'une de ses surfaces) puis éventuellement réémis vers l'intérieur (le local).

D'une manière générale, toutes les caractéristiques lumineuses présentées dans la présente description sont obtenues selon les principes et méthodes décrits dans la norme européenne (et française) EN 410 se rapportant à la détermination des caractéristiques lumineuses et solaires des vitrages utilisés dans le verre pour la construction.

Le but de la présente invention est ainsi de fournir des vitrages comprenant un empilement de couches leur conférant des propriétés antisolaires et présentant une sélectivité élevée, au sens précédemment décrit, c'est-à-dire un rapport T_{L}/g très supérieur à 1, ledit empilement étant durable dans le temps sans précaution particulière. Un autre but de la présente invention est de fournir des vitrages antisolaires dont ledit empilement est capable, notamment après un traitement thermique tel qu'une trempe, de conserver, notamment en transmission ou en réflexion, une couleur sensiblement neutre ou encore une teinte bleue-verte peu intense, telle que recherchée notamment dans le secteur du bâtiment. Par couleur neutre ou teinte bleue-verte, on entend au sens de la présente invention, dans le système de colorimétrie (L*, a*, b*), des valeurs a* et b* inférieures ou proches de 10 et négatives.

Un vitrage selon l'invention permet ainsi avantageusement de sélectionner le rayonnement le traversant, en favorisant la transmission des ondes lumineuses, c'est-à-dire dont la longueur d'onde est comprise entre environ 380 et 780 nm, et en absorbant sélectivement la majorité des radiations infrarouges, c'est-à-dire dont la longueur d'onde est supérieure à 780 nm, en particulier les Infrarouges proches, c'est-à-dire dont la longueur d'onde est comprise entre environ 780nm et environ 1400 nm.

Selon l'invention, il est ainsi possible de maintenir une forte illumination de la pièce ou de l'habitacle protégé par le vitrage tout en minimisant la quantité de chaleur y entrant.

Selon un autre avantage de la présente invention, les vitrages munis des empilements selon l'invention sont simples à produire et permettent également une réduction sensible des coûts de production, par rapport à d'autres vitrages connus à propriétés antisolaires, notamment ceux comprenant un empilement à base d'argent.

Plus précisément, la présente invention se rapporte à un vitrage antisolaire comprenant un substrat verrier et un empilement de couches à fonction antisolaire, ledit empilement de couches incorporant une couche absorbant sélectivement le rayonnement infrarouge de longueur d'onde supérieur à 800 nm, ladite couche absorbante étant constituée par un oxyde de titane substitué par un élément X choisi parmi Nb ou Ta, le pourcentage atomique [X/Ti+X] étant compris entre 4% et 9% et l'épaisseur de ladite couche absorbante étant comprise entre 20 et 200 nanomètres.

Selon des modes préférés de réalisation de la présente invention :
- le pourcentage atomique [X/Ti+X] est compris entre 4% et environ 7%, de préférence encore entre environ 5 et environ 7%,
- l'épaisseur de ladite couche absorbante est comprise entre 30 et 100 nanomètres,
- X est le Niobium.

Selon l'invention, le vitrage antisolaire comprend un empilement constitué par la succession des couches suivantes, à partir de la surface du substrat verrier:
- une ou plusieurs couches inférieures de protection de la couche absorbante contre la migration des ions alcalins issus du substrat verrier, d'épaisseur géométrique, au total, comprise entre 5 et 150 nm,
- ladite couche absorbante constituée par un oxyde de titane substitué par un élément X dopant choisi parmi Nb ou Ta, de préférence Nb,
- une ou plusieurs couches supérieures de protection de la couche absorbante contre l'oxygène de l'air, notamment lors d'un traitement thermique tel qu'une trempe ou un recuit, la ou lesdites couches étant d'épaisseur géométrique, au total, comprise entre 5 et 150 nm.

De préférence, la ou les couches de protection inférieures et supérieures sont choisies parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.

Selon un mode possible et préféré de l'invention, notamment si le vitrage doit subir un traitement thermique tel qu'une trempe, l'empilement incorpore en outre, entre lesdites couches de protection et la couche absorbante, une couche d'un métal, éventuellement partiellement ou totalement oxydée et/ou nitrurée, d'épaisseur inférieure à 5 nm, de préférence d'épaisseur inférieure à 3 nm ou même inférieure à 2 nm.

Cette fine couche va s'oxyder ou se nitrurer partiellement ou totalement et protéger ainsi la couche absorbante, quand la couche supérieure est par exemple déposée(s) par pulvérisation réactive en présence d'azote, comme pour le cas du dépôt d'une couche protectrice supérieure en Si₃N₄ ou encore s'oxyder lors d'un traitement thermique du type trempe. Elle est de préférence à base d'un métal comme le niobium Nb, le tantale Ta, le titane Ti, le chrome Cr, le nickel Ni ou un alliage d'au moins deux de ces métaux comme un alliage Ni-Cr. Si elle n'est destinée qu'à remplir ce rôle de couche « sacrificielle », elle peut être extrêmement mince, notamment de l'ordre de 0,2 à 1,5 et de préférence de 0,5 à 1,5 nm, afin de pénaliser le moins possible l'empilement en termes de transmission lumineuse. On peut aussi lui conférer une épaisseur pouvant aller jusqu'à 5 nm si on l'utilise également pour ajuster la valeur de transmission lumineuse au niveau voulu, notamment si on vise plutôt la fabrication de vitrages anti-solaires à T_{L} réduite.

De préférence le métal est choisi parmi Ti ou un alliage NiCr.

Selon un mode ayant donné de bonnes performances, l'empilement comprend la succession des couches suivantes, à partir de la surface du substrat verrier:
- une couche inférieure d'épaisseur comprise entre 5 et 150 nm, choisie parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.
- ladite couche absorbante constituée par un oxyde de titane substitué par Nb, le pourcentage atomique [Nb/Ti+Nb] dans ladite couche absorbante étant compris entre 4% et environ 7% et son épaisseur étant comprise entre 30 et 100 nm,
- une couche supérieure d'épaisseur comprise entre 5 et 150 nm, choisie parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.
- de préférence, une couche de titane métallique éventuellement partiellement ou totalement oxydée et/ou nitrurée, entre lesdites couches de protection et ladite couche absorbante, d'épaisseur inférieure à 3 nm.

A titre d'exemple, un vitrage antisolaire selon l'invention comprend un empilement constitué par la succession des couches suivantes, à partir de la surface du substrat verrier :
- une couche de Si₃N₄ d'épaisseur comprise entre 5 et 100 nm, notamment entre 5 et 70 nm,
- une couche de titane métallique, partiellement ou totalement oxydée et/ou nitrurée, d'épaisseur géométrique inférieure à 2 nm,
- ladite couche absorbante du rayonnement infrarouge constituée par un oxyde de titane substitué par Nb, le pourcentage atomique [Nb/Ti+Nb] dans ladite couche absorbante étant compris entre 4% et environ 7% et son épaisseur étant comprise entre 30 et 100 nm,
- une couche de titane métallique, partiellement ou totalement oxydée et/ou nitrurée, d'épaisseur géométrique inférieure à 2 nm,
- une couche de Si₃N₄ d'épaisseur comprise entre 5 et 100 nm, notamment entre 5 et 70 nm.

L'invention se rapporte également à un procédé de fabrication d'un vitrage antisolaire comprenant les étapes suivantes :
- fabrication d'un substrat verrier,
- dépôt sur le substrat verrier d'un empilement de couches par une technique de pulvérisation cathodique sous vide assistée par magnétron,
dans lequel la couche absorbante constituée par un oxyde de titane substitué par un élément X dopant choisi parmi Nb ou Ta est obtenue par pulvérisation d'une cible constituée par un oxyde de titane substitué par un élément X choisi parmi Nb ou Ta, le pourcentage atomique [X/Ti+X] étant compris entre 4% et 9%, dans une atmosphère résiduelle d'argon ou d'un mélange d'argon et d'oxygène.

Un procédé de fabrication alternatif d'un vitrage antisolaire selon l'invention, comprenant les étapes suivantes :
- fabrication d'un substrat verrier,
- dépôt sur le substrat verrier d'un empilement de couches par une technique de pulvérisation cathodique sous vide assistée par magnétron,
dans lequel la couche absorbante est constituée par un oxyde de titane substitué par un élément X dopant choisi parmi Nb ou Ta et est obtenue par pulvérisation d'une cible constituée par un mélange de Titane métallique et d'un métal X choisi parmi Nb ou Ta, le pourcentage atomique [X/Ti+X] dans la cible étant compris entre environ 4% et environ 9%, dans une atmosphère résiduelle d'oxygène et d'argon.

Les exemples qui suivent sont donnés à titre purement illustratifs et ne limitent sous aucun des aspects décrits la portée de la présente invention. A des fins de comparaison, tous les empilements des exemples qui suivent sont synthétisés sur des substrats verriers montés en double vitrage. Toutes les couches des empilements ont été déposées selon les techniques classiques de dépôts sous vide par pulvérisation magnétron. A des fins de comparaison directe de leurs performances, tous les vitrages finalement obtenus dans les exemples qui suivent sont des doubles vitrages constitués par deux substrats de verre Planilux® d'épaisseur 6 mm, séparés par une lame de gaz argon de 16 mm (6/16Ar/6).

### Exemple 1:

Dans cet exemple selon l'invention, on a déposé, selon les techniques magnétrons classiques, sur un substrat verre du type Planilux®, un empilement constitué par la séquence de couches suivantes:
Verre /Si₃N₄ /Ti /TiO₂:Nb /Ti Si₃N₄ (40nm) (1nm) (50nm) (1nm) (40nm)

La couche TiO₂ est obtenue par la technique de pulvérisation magnétron à partir d'une cible de TiO₂ comprenant 6% atomique de Niobium ([Nbₐₜ/(Tiₐₜ + Nbₐₜ)=0,06]). Il a été vérifié par analyse microsonde de Castaing (aussi appelé EPMA ou electron probe microanalyser selon l'appellation Anglaise) et SIMS (spectrométrie de masse à ionisation secondaire) de la couche finalement obtenue que le taux de dopage dans celle-ci correspond sensiblement à la composition de la cible.
Le substrat muni de son empilement a ensuite été soumis à un traitement thermique consistant en un chauffage à 650°C pendant quelques minutes suivi d'une trempe. Ce traitement est représentatif des conditions subies par le vitrage si celui-ci doit être trempé ou encore bombé.
Le substrat est monté au sein d'un double vitrage avec un autre substrat Planilux® (6/16Ar/6), de telle façon que l'empilement de couches se retrouve en face 2 de l'empilement.

Sur ce double vitrage selon l'invention, on a mesuré les facteurs T_{L} et g afin d'en déterminer la sélectivité.

### Exemple comparatif 1 :

Dans cet exemple, on a pratiqué de façon identique à l'exemple 1 et obtenu un empilement sensiblement identique, à l'exception que la cible utilisée pour le dépôt de la couche de TiO₂ ne comprend cette fois pas de niobium.

Sur ce double vitrage, on a mesuré dans les mêmes conditions que précédemment les facteurs T_{L} et g afin d'en déterminer la sélectivité.

### Exemple comparatif 2 :

Dans cet exemple on a utilisé un double vitrage (6/16Ar/6) commercialisé par la société Saint-Gobain Glass France sous la référence Cool Lite KN 164 et dont la couche active, c'est-à-dire celle agissant sur le rayonnement solaire traversant ledit vitrage, est une couche d'argent d'environ 10 nanomètres, ladite couche d'argent étant positionnée dans un empilement déposé en face 2 du double vitrage.

Sur ce double vitrage commercial, on a mesuré dans les mêmes conditions que précédemment les facteurs T_{L} et g afin d'en déterminer la sélectivité.

### Exemple comparatif 3 :

Dans cet exemple on a utilisé un double vitrage (6/16Ar/6) commercialisé par la société Saint-Gobain Glass France sous la référence Cool Lite ST 167 et dont la couche active, c'est-à-dire celle agissant sur le rayonnement solaire traversant ledit vitrage, est une couche de nitrure de Niobium d'environ 15 nanomètres, ladite couche de nitrure de niobium étant positionnée dans un empilement déposé en face 2 du double vitrage.

Sur ce double vitrage commercial, on a mesuré dans les mêmes conditions que précédemment les facteurs T_{L} et g afin d'en déterminer la sélectivité.

### Exemple comparatif 4 :

Dans cet exemple, on a pratiqué de façon identique à l'exemple 1 avec les seules modifications suivantes :
- la couche TiO₂ est obtenue par la technique de pulvérisation magnétron à partir d'une cible de TiO₂ comprenant une quantité d'environ 1,7% atomique de Niobium,
- la vitesse de défilement du substrat verrier dans la chambre magnétron est ajustée de telle façon que la couche de TiO₂/Nb déposée présente une épaisseur égale à 300 nm.

Sur ce double vitrage, on a mesuré dans les mêmes conditions que précédemment les facteurs T_{L} et g afin d'en déterminer la sélectivité.

Les caractéristiques des différents vitrages obtenus, mesurées selon la norme EN 410, sont reportées dans le tableau 1 qui suit :

**Tableau 1**

| | Exemple 1 | Exemple comp. 1 | Exemple comp. 2 | Exemple comp. 3 | Exemple comp. 4 |
|---|---|---|---|---|---|
| Couche active | TiO₂: Nb (6%at.) | TiO₂ | Ag | Nb | TiO₂: Nb (1,7%at.) |
| Epaisseur couche active (nm) | 50 | 50 | 10 | 15 | 300 |
| T_{L} (%) | 60 | 85 | 58 | 60 | 72 |
| g (%) | 51 | 80 | 46 | 58 | 65 |
| Sélectivité (T_{L}/g) | 1,18 | 1,06 | 1,26 | 1,02 | 1,11 |

La comparaison des données reportées dans le tableau 1 montre qu'une couche de TiO₂ non dopée de 50 nanomètres d'épaisseur (exemple comparatif 1) n'est pas sélective et apparait relativement transparente, aussi bien à la lumière visible qu'à la chaleur, en particulier aux infrarouges thermiques. L'introduction dans cette couche du dopant Nb, à des concentrations importantes de l'ordre de 6% selon l'invention (exemple 1), permet cependant, en conservant une épaisseur de la couche tout aussi faible, d'augmenter de façon sensible la sélectivité du vitrage. Les niveaux de sélectivité ainsi obtenus sont ainsi plus poches de ceux observés pour des empilements bas émissifs du type à base d'une couche d'argent (exemple comparatif 2), qui fonctionnent pourtant non pas sur le mode de l'absorption des infrarouges proches, mais sur le mode de leur réflexion. Un tel résultat est à ce titre tout à fait surprenant.

La comparaison de l'exemple 1 selon l'invention et de l'exemple comparatif 3 indique que vitrages munis de couches actives fonctionnant principalement par absorption du rayonnement solaire selon l'invention sont beaucoup plus sélectives que d'autres couches connues à fonctionnalités antisolaires fonctionnant selon ce même principe, en particulier les couches à base de niobium ou de nitrure de niobium.

Enfin, la comparaison de l'exemple 1 selon l'invention et de l'exemple comparatif 4 indique que la combinaison d'un taux de dopage en niobium proche de 6% et d'une épaisseur de couche faible (50 nm), permet au final l'obtention d'empilements dont la sélectivité est plus élevée que celle d'empilements comprenant une couche active dont le taux de dopage est moindre mais dont l'épaisseur est 6 fois plus élevée. Un tel résultat est inattendu dans la mesure où il est connu les propriétés de réflexion des infrarouges par une couche d'oxyde transparent tel que le TiO₂ augmentent fortement avec son épaisseur.

Les caractéristiques colorimétriques des vitrages, dans le système L*, b*, a*, ont été également mesurés en transmission, en réflexion interne (coté habitacle) et en réflexion externe (coté extérieur) et sont reportées dans le tableau 2 qui suit :

**Tableau 2**

| Exemple | TRANSMISSION LUMINEUSE | | | | | REFLEXION INTERIEURE | | | REFLEXION EXTERIEURE | | |
|---|---|---|---|---|---|---|---|---|---|---|---|
| | T_{L} | g | T_{L}/g | a*_{T} | b*_{T} | R_{Lint} | a*_{Rint} | b*_{Rint} | R_{Lext} | a*_{Rext} | b*_{Rext} |
| Exemple 1 | 60 | 0,51 | 1,18 | -3,1 | -0,5 | 9 | -6 | -9,5 | 10 | -5,6 | -13,7 |
| Exemple compar. 3 | 58 | 0,46 | 1,26 | -2,8 | -2,1 | 3 | 8,6 | -9,8 | 10 | -1,8 | -7,0 |

Les données reportées dans le tableau 2 montrent les propriétés idéales de colorimétrie des vitrages munis des empilements selon l'invention : Les paramètres a* et b* selon l'exemple 1 sont toujours négatifs et relativement faibles, quel que soit la position et l'angle de l'observateur, en transmission comme en réflexion.
De telles propriétés colorimétriques entraînent une couleur neutre ou bleue-verte peu intense des vitrages, telle qu'actuellement recherchée dans le domaine du bâtiment.

Selon un autre avantage, les empilements antisolaires selon la présente invention, dont la couche active est à base d'un oxyde de titane dopé présentant une épaisseur relativement faible, c'est-à-dire de quelques dizaines de nanomètres, sont extrêmement simples et peu couteux à fabriquer, notamment par la technique du dépôt sous vide par pulvérisation cathodique dite magnétron : une faible épaisseur de la couche d'oxyde de titane permet en effet un gain de productivité non négligeable, car la vitesse de défilement du substrat dans la chambre de dépôt est directement fonction de l'épaisseur désirée de ladite couche.

En outre, des tests de durabilité complémentaires ont montré que de telles couches pouvaient être sans difficulté déposées en face 2 d'un vitrage simple, sans risque de dégradation de celle-ci, par action chimique (humidité) ou par action mécanique (abrasion de l'empilement).

## Revendications

1. Vitrage antisolaire automobile ou de bâtiment comprenant un substrat verrier et un empilement de couches à fonction antisolaire, agissant sur le rayonnement solaire pour permettre une protection solaire et/ou une isolation thermique de l'habitacle ou de l'habitation, ledit empilement de couches incorporant une couche absorbant sélectivement le rayonnement infrarouge de longueur d'onde supérieur à 800 nm, ladite couche absorbante étant constituée par un oxyde de titane substitué par un élément X dopant choisi parmi Nb ou Ta, le pourcentage atomique [X/Ti+X] étant compris entre 4% et 9% et l'épaisseur de ladite couche absorbante étant comprise entre 20 nanomètres et 200 nanomètres, l'empilement étant constitué par la succession des couches suivantes, à partir de la surface du substrat verrier:
- une ou plusieurs couches inférieures de protection de la couche absorbante contre la migration des ions alcalins issus du substrat verrier, d'épaisseur géométrique, au total, comprise entre 5 et 150 nm,
- ladite couche absorbante constituée par un oxyde de titane substitué par un élément X dopant choisi parmi Nb ou Ta, de préférence Nb,
- une ou plusieurs couches supérieures de protection de la couche absorbante contre l'oxygène de l'air, notamment lors d'un traitement thermique tel qu'une trempe ou un recuit, la ou lesdites couches étant d'épaisseur géométrique, au total, comprise entre 5 et 150 nm.

2. Vitrage antisolaire selon la revendication 1, dans lequel le pourcentage atomique [X/Ti+X] est compris entre 4% et 7%.

3. Vitrage antisolaire selon l'une des revendications 1 ou 2, dans lequel l'épaisseur de ladite couche absorbante est comprise entre 30 et 100 nanomètres.

4. Vitrage antisolaire selon l'une des revendications précédentes, dans lequel X est le Niobium.

5. Vitrage antisolaire selon la revendication précédente, dans lequel la ou les couches de protection inférieures et supérieures sont choisies parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.

6. Vitrage antisolaire selon l'une des revendications 5 ou 6, dans lequel l'empilement incorpore en outre, entre lesdites couches de protection inférieures et supérieures et la couche absorbante, une couche d'un métal, éventuellement partiellement ou totalement oxydée et/ou nitrurée, d'épaisseur inférieure à 5 nm, de préférence d'épaisseur inférieure à 3 nm.

7. Vitrage antisolaire selon la revendication précédente, dans lequel le métal est choisi parmi Ti ou un alliage NiCr.

8. Vitrage antisolaire selon l'une des revendications précédentes dans lequel l'empilement comprend la succession des couches suivantes, à partir de la surface du substrat verrier:
- une couche inférieure d'épaisseur comprise entre 5 et 150 nm, choisie parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.
- ladite couche absorbante constituée par un oxyde de titane substitué par Nb, le pourcentage atomique [Nb/Ti+Nb] dans ladite couche absorbante étant compris entre 4% et 7% et son épaisseur étant comprise entre 30 et 100 nm,
- une couche supérieure d'épaisseur comprise entre 5 et 150 nm, choisie parmi le nitrure de Silicium Si₃N₄ éventuellement dopé par Al, Zr, B, le nitrure d'aluminium AlN, l'oxyde d'étain, un oxyde mixte de zinc ou d'étain Sn_{y}Zn_{z}Oₓ, l'oxyde de silicium SiO₂, l'oxyde de titane non dopé TiO₂, les oxynitrures de silicium SiOₓN_{y}.
- de préférence, une couche de titane métallique éventuellement partiellement ou totalement oxydée et/ou nitrurée, entre lesdites couches de protection et ladite couche absorbante, d'épaisseur inférieure à 2 nm.

9. Vitrage antisolaire selon l'une des revendications précédentes, dans lequel l'empilement est constitué par la succession des couches suivantes, à partir de la surface du substrat verrier:
- une couche de Si₃N₄ d'épaisseur comprise entre 5 et 100 nm,
- une couche de titane métallique, partiellement ou totalement oxydée et/ou nitrurée, d'épaisseur géométrique inférieure à 2 nm,
- ladite couche absorbante du rayonnement infrarouge constituée par un oxyde de titane substitué par Nb, le pourcentage atomique [Nb/Ti+Nb] dans ladite couche absorbante étant compris entre 4% et 7% et son épaisseur étant comprise entre 30 et 100 nm,
- une couche de titane métallique, partiellement ou totalement oxydée et/ou nitrurée, d'épaisseur géométrique inférieure à 2 nm,
- une couche de Si₃N₄ d'épaisseur comprise entre 5 et 100 nm.

## Patentansprüche

1. Sonnenschutzverglasung für Automobil oder Bauwesen, die ein Glassubstrat und einen Stapel von Schichten mit Sonnenschutzfunktion umfasst, die auf die Sonnenstrahlung einwirkt, um einen Sonnenschutz und/oder eine Wärmeisolation der Fahrgastzelle oder des Wohnraums zu erlauben, wobei der Stapel von Schichten eine Schicht enthält, die selektiv die Infrarotstrahlung mit Wellenlänge größer als 800 Nanometer absorbiert, wobei die absorbierende Schicht aus einem Titanoxid, substituiert durch ein Dotierelement X, besteht, der aus Nb oder Ta ausgewählt ist, wobei der atomare Prozentgehalt [X/Ti+X] zwischen 4 % und 9 % liegt, und die Stärke der absorbierenden Schicht zwischen 20 Nanometer und 200 Nanometer liegt, wobei der Stapel aus der Abfolge der folgenden Schichten ausgehend von der Oberfläche des Glassubstrats besteht:
- eine oder mehrere untere Schichten zum Schutz der absorbierenden Schicht vor der Migration der alkalischen Ionen, die aus dem Glassubstrat stammen, mit einer geometrischen Stärke von insgesamt 5 bis 150 nm,
- wobei die absorbierende Schicht aus einem Titanoxid, substituiert durch ein Dotierelement X,, das aus Nb oder Ta, bevorzugt Nb, ausgewählt ist, besteht,
- eine oder mehrere obere Schichten zum Schutz der absorbierenden Schicht vor dem Sauerstoff der Luft, insbesondere bei einer Wärmebehandlung, wie ein Tempern oder ein Glühen, wobei die obere(n) Schicht(en) eine geometrische Stärke von insgesamt 5 bis 150 nm hat/haben.

2. Sonnenschutzverglasung nach Anspruch 1, wobei der atomare Prozentgehalt [X/Ti+X] zwischen 4 % und 7 % liegt.

3. Sonnenschutzverglasung nach einem der Ansprüche 1 oder 2, wobei die Stärke der absorbierenden Schicht zwischen 30 und 100 Nanometer liegt.

4. Sonnenschutzverglasung nach einem der vorhergehenden Ansprüche, wobei X das Niobium ist.

5. Sonnenschutzverglasung nach dem vorhergehenden Anspruch, bei der die untere(n) und obere(n) Schutzschicht oder Schutzschichten aus Siliziumnitrid Si₃N₄ eventuell mit Al, Zr, B dotiert, dem Aluminiumnitrid AIN, dem Zinnoxid, einem Mischoxid aus Zink oder Zinn Sn_{y}Zn_{z}Oₓ, Siliziumoxid SiO₂, undotiertem Titanoxid TiO₂, den Siliziumoxinitriden SiOₓN_{y} ausgewählt ist/sind.

6. Sonnenschutzverglasung nach einem der Ansprüche 5 oder 6, wobei der Stapel außerdem zwischen den unteren und oberen Schutzschichten und der absorbierenden Schicht eine Metallschicht enthält, eventuell teilweise oder vollständig oxidiert und/oder nitriert, mit einer Stärke kleiner als 5 nm, bevorzugt mit einer Stärke kleiner als 3 nm.

7. Sonnenschutzverglasung nach dem vorhergehenden Anspruch, wobei das Metall aus Ti oder einer NiCr-Legierung ausgewählt ist.

8. Sonnenschutzverglasung nach einem der vorhergehenden Ansprüche, wobei der Stapel die Abfolge der folgenden Schichten ausgehend von der Oberfläche des Glassubstrats umfasst:
- eine untere Schicht mit einer Stärke zwischen 5 und 150 nm, die aus dem Siliziumnitrid Si₃N₄ eventuell dotiert mit Al, Zr, B, dem Aluminiumnitrid AIN, dem Zinnoxid, einem Mischoxid aus Zink oder Zinn Sn_{y}Zn_{z}Oₓ, dem Siliziumoxid SiO₂, dem undotierten Titanoxid TiO₂, den Siliziumoxinitriden SiOₓN_{y} ausgewählt ist.
- die absorbierende Schicht, die aus einem Titanoxid, substituiert durch Nb, besteht, wobei der atomare Prozentgehalt [Nb/Ti+Nb] in der absorbierenden Schicht zwischen 4 % und 7 % liegt, und ihre Stärke zwischen 30 und 100 nm liegt,
- eine obere Schicht mit einer Stärke zwischen 5 und 150 nm, die aus dem Siliziumnitrid Si₃N₄ eventuell dotiert mit Al, Zr, B, dem Aluminiumnitrid AIN, dem Zinnoxid, einem Mischoxid aus Zink oder Zinn Sn_{y}Zn_{z}Oₓ, dem Siliziumoxid SiO₂, dem undotierten Titanoxid TiO₂, den Siliziumoxinitriden SiOₓN_{y}ausgewählt ist.
- bevorzugt eine metallische Titanschicht, die eventuell teilweise oder vollständig oxidiert und/oder nitriert ist, zwischen den Schutzschichten und der absorbierenden Schicht, mit einer Stärke kleiner als 2 nm.

9. Sonnenschutzverglasung nach einem der vorhergehenden Ansprüche, wobei der Stapel aus der Abfolge der folgenden Schichten ausgehend von der Oberfläche des Glassubstrats besteht:
- eine Si₃N₄-Schicht mit einer Stärke zwischen 5 und 100 nm,
- eine metallische Titanschicht, die teilweise oder vollständig oxidiert und/oder nitriert ist, mit einer geometrischen Stärke kleiner als 2 nm,
- die absorbierende Schicht der Infrarotstrahlung, die aus einem Titanoxid, substituiert durch Nb, besteht, wobei der atomare Prozentgehalt [Nb/Ti+Nb] in der absorbierenden Schicht zwischen 4 % und 7 % liegt, und ihre Stärke zwischen 30 und 100 nm liegt,
- eine metallische Titanschicht, die teilweise oder vollständig oxidiert und/oder nitriert ist, mit einer geometrischen Stärke kleiner als 2 nm,
- eine Schicht aus Si₃N₄ mit einer Stärke zwischen 5 und 100 nm.

## Claims

1. Automotive or architectural solar-control glazing that comprises a glass substrate and a solar-control thin-film multilayer, acting on solar radiation so as to enable solar protection and/or thermal insulation of the passenger compartment or dwelling, said thin-film multilayer incorporating a film selectively absorbing infrared radiation having a wavelength longer than 800 nm, said absorbing film consisting of a titanium oxide substituted with a dopant element X chosen from Nb or Ta, the atomic percentage [X/Ti+X] lying between 4% and 9% and the thickness of said absorbing film lying between 20 nanometers and 200 nanometers, said multilayer consisting of the following films in succession, starting from the surface of the glass substrate:
- one or more lower films for protecting the absorbing film from migration of alkali-metal ions coming from the glass substrate, having a geometrical thickness in total lying between 5 and 150 nm;
- said absorbing film consisting of a titanium oxide substituted with a doping element X chosen from Nb or Ta, preferably Nb; and
- one or more upper films for protecting the absorbing film against oxygen in the air, especially during a heat treatment such as a temper or an anneal, the film or films in total having a geometrical thickness lying between 5 and 150 nm.

2. The solar-control glazing as claimed in claim 1, in which the atomic percentage [X/Ti+X] lies between about 4% and about 7%.

3. The solar-control glazing as claimed in either one of claims 1 and 2, in which the thickness of said absorbing film lies between 30 and 100 nanometers.

4. The solar-control glazing as claimed in one of the preceding claims, in which X is niobium.

5. The solar-control glazing as claimed in the preceding claim, in which the lower and upper protective film or films are chosen from: silicon nitride Si₃N₄ optionally doped with Al, Zr or B; aluminum nitride AlN; tin oxide; a mixed tin zinc oxide Sn_{y}Zn_{z}Oₓ; silicon oxide SiO₂; undoped titanium oxide TiO₂; and silicon oxynitrides SiOₓN_{y}.

6. The solar-control glazing as claimed in either one of claims 4 and 5, in which the multilayer furthermore incorporates, between said lower and upper protective films and the absorbing film, a metal film, optionally partially or completely oxidized and/or nitrided, having a thickness smaller than 5 nm, preferably having a thickness smaller than 3 nm.

7. The solar-control glazing as claimed in the preceding claim, in which the metal is chosen from Ti or an NiCr alloy.

8. The solar-control glazing as claimed in one of the preceding claims, in which the multilayer comprises the following films in succession, starting from the surface of the glass substrate:
- a lower film having a thickness lying between 5 and 150 nm, chosen from: silicon nitride Si₃N₄ optionally doped with Al, Zr or B; aluminum nitride AlN; tin oxide; a mixed tin zinc oxide Sn_{y}Zn_{z}Oₓ; silicon oxide SiO₂; undoped titanium oxide TiO₂; and silicon oxynitrides SiOₓN_{y};
- said absorbing film consisting of a titanium oxide substituted with Nb, the atomic percentage [Nb/Ti+Nb] in said absorbing film lying between about 4% and about 7% and its thickness lying between 30 and 100 nm;
- an upper film having a thickness lying between 5 and 150 nm, chosen from: silicon nitride Si₃N₄ optionally doped with Al, Zr or B; aluminum nitride AlN; tin oxide; a mixed tin zinc oxide Sn_{y}Zn_{z}Oₓ; silicon oxide SiO₂; undoped titanium oxide TiO₂; and silicon oxynitrides SiOₓN_{y}; and
- preferably, a titanium metal film optionally partially or completely oxidized and/or nitrided, between said protective films and said absorbing film, having a thickness smaller than 2 nm.

9. The solar-control glazing as claimed in one of the preceding claims, in which the multilayer consists of the following films in succession, starting from the surface of the glass substrate:
- an Si₃N₄ film having a thickness lying between 5 and 100 nm;
- a titanium metal film, partially or completely oxidized and/or nitrided, having a geometrical thickness smaller than 2 nm;
- said film absorbing infrared radiation, the film consisting of a titanium oxide substituted with Nb, the atomic percentage [Nb/Ti+Nb] in said absorbing film lying between about 4% and about 7% and its thickness lying between 30 and 100 nm;
- a titanium metal film, partially or completely oxidized and/or nitrided, having a geometrical thickness smaller than 2 nm; and
- an Si₃N₄ film having a thickness lying between 5 and 100 nm.
